# EUROPÄISCHE PATENTSCHRIFT

(11) **EP 1 133 849 B1**
(45) Veröffentlichungstag und Bekanntmachung des Hinweises auf die Patenterteilung: **12.06.2002**
(21) Anmeldenummer: 99965472.6
(22) Anmeldetag: 15.12.1999
(51) Int. Cl.: H04L 9/00, H04N 7/167

(54) **VERFAHREN UND VORRICHTUNG ZUM ERZEUGEN EINES VERSCHLÜSSELTEN NUTZDATENSTROMS UND VERFAHREN UND VORRICHTUNG ZUM ENTSCHLÜSSELN EINES VERSCHLÜSSELTEN NUTZDATENSTROMS**
METHOD AND DEVICE FOR GENERATING AN ENCODED USER DATA STREAM AND METHOD AND DEVICE FOR DECODING SUCH A DATA STREAM
PROCEDE ET DISPOSITIF POUR LA GENERATION D'UN FLUX DE DONNEES UTILES CHIFFRE ET PROCEDE ET DISPOSITIF POUR LE DECHIFFREMENT D'UN FLUX DE DONNEES UTILES CHIFFRE

(30) Priorität: 16.02.1999 DE 19906450
(43) Veröffentlichungstag der Anmeldung: 19.09.2001
(73) Patentinhaber: Fraunhofer-Gesellschaft zur Förderung der angewandten Forschung e.V., 80636 München (DE)
(72) Erfinder: RUMP, Niels, D-91056 Erlangen (DE); KOLLER, Jürgen, D-91054 Erlangen (DE); BRANDENBURG, Karlheinz, D-91054 Erlangen (DE)
(74) Vertreter: Schoppe, Fritz, Dipl.-Ing.
(86) Internationale Anmeldenummer: EP9909981
(87) Internationale Veröffentlichungsnummer: WO0049763

(56) Entgegenhaltungen:
- EP-A- 0 438 154
- US-A- 5 974 144

## Beschreibung

Die vorliegende Erfindung bezieht sich auf die Verschlüsselung und Entschlüsselung von Nutzdaten und insbesondere auf ein Verschlüsselungskonzept, bei dem die Nutzdaten mittels eines bestimmten Schlüssels verschlüsselt sind, wobei dieser Schlüssel wiederum selbst verschlüsselt ist, um eine kundenselektive Übertragen von Nutzdaten zu verwirklichen.

Mit dem Auftreten von Telekommunikationsnetzen und insbesondere aufgrund der großen Verbreitung von Multimediadaten-fähigen Personalcomputern und in letzter Zeit auch von sogenannten Solid-State-Playern, entstand ein Bedarf, digitale Multimediadaten, wie z. B. digitale Audiodaten und/oder digitale Videodaten, kommerziell zu vertreiben. Die Telekommunikationsnetze können beispielsweise analoge Telephonleitungen, digitale Telephonleitungen, wie z. B. ISDN, oder auch das Internet sein. Unter kommerziellen Anbietern von Multimediaprodukten besteht der Bedarf, Multimediadaten zu verkaufen oder auszuleihen, wobei es einem Kunden möglich sein sollte, aus einem bestimmten Katalog zu jeder Zeit individuell ein bestimmtes Produkt auswählen zu können, das dann selbstverständlich nur von dem Kunden, der dafür bezahlt hat, benutzt werden darf.

Im Gegensatz zu bekannten verschlüsselten Fernsehprogrammen, wie z. B. von dem Fernsehkanal Premiere, bei dem die ausgesendeten Daten für alle Benutzer, die gegen eine bestimmte Gebühr eine geeignete Entschlüsselungsvorrichtung erworben haben, gleich verschlüsselt sind, soll die vorliegende Erfindung Verfahren und Vorrichtungen schaffen, die eine individuelle, kundenselektive und sichere Verschlüsselung und Entschlüsselung von Multimediadaten ermöglichen. Im Gegensatz zu den genannten Fernsehkanälen, die ein festes Programm vorgeben, für das sich der Benutzer komplett entscheiden muß, ermöglichen die Verfahren und Vorrichtungen der vorliegenden Erfindung eine maximale Wahlfreiheit des Kunden, d. h. derselbe muß nur für die Produkte bezahlen, die er tatsächlich auch benutzen will.

Die DE 196 25 635 C1 beschreibt Verfahren und Vorrichtungen zum Ver- bzw. Entschlüsseln von Multimediadaten, wobei die Multimediadaten in Form einer verschlüsselten Multimediadatei vorliegen, die einen Bestimmungsdatenblock und einen Nutzdatenblock aufweist. Teile des Bestimmungsdatenblocks sowie zumindest Teile des Nutzdatenblocks werden mit unterschiedlichen Schlüsseln verschlüsselt, wobei insbesondere symmetrische Verschlüsselungsverfahren eingesetzt werden.

Symmetrische Verschlüsselungsverfahren haben einerseits den Vorteil, daß sie relativ schnell arbeiten, andererseits benötigt der Benutzer, der die Datei entschlüsseln will, den gleichen Schlüssel wie der Provider oder Lieferant, z. B. die Deutsche Telekom, der die Multimediadaten verschlüsselt hat, um sie an den Kunden zu verkaufen. Somit haben sowohl der Provider als auch der Benutzer, d. h. der Kunde, einerseits eine Tabelle mit vielen möglichen symmetrischen Verschlüsselungsalgorithmen, wie z. B. DES oder Blowfish, und andererseits eine Tabelle für mögliche Schlüssel, derart, daß vom Provider ein Eintrag in dem Bestimmungsdatenblock der Multimediadaten erzeugt wird, den der Benutzer verwendet, um damit auf seine Schlüsseltabelle zuzugreifen, um den korrekten Schlüssel zum Entschlüsseln auszuwählen.

Aufgrund der stark zunehmenden Verbreitung des MP3-Standards sind auf dem Markt sogenannten Solid-State-Player erschienen, die zum Entschlüsseln und Abspielen von Multimediadaten eingesetzt werden sollen. Diese Geräte sollen sehr preisgünstig sein und dürfen daher lediglich eine begrenzte Menge an Speicherplatz und Rechenleistung haben. Im Gegensatz zu Personalcomputern, bei denen die vorhandenen Ressourcen die für die Entschlüsselung von Multimediadaten benötigten Ressourcen bei weitem übersteigen, müssen Solid-State-Player oder Stereoanlagen oder Auto-HiFi-Geräte, damit sie sich auf dem hart umkämpften Markt durchsetzen können, preiswert sein. Dazu ist es erforderlich, diese Geräte beim Entschlüsseln und Abspielen der entschlüsselten Multimediadaten soweit als möglich bezüglich Rechenleistung und Speicherplatz zu entlasten. Andererseits besteht nach wie vor die Anforderung, daß die verwendeten Verschlüsselungstechniken ausreichend sicher sind, um für einen Kunden vertrauenswürdig zu sein, und um einen Mißbrauch auch verschlüsselter Multimediadaten zu vermeiden. Weiterhin gilt es, wirksam Urheberrechtsverletzungen zu begegnen, insbesondere, wenn Multimediadaten ohne Autorisierung durch den Urheber bzw. eine Verwertungsgesellschaft abgespielt werden, oder auch ohne Autorisierung verändert werden.

Die Aufgabe der vorliegenden Erfindung besteht darin, ein effizientes und sicheres Konzept zur ver- bzw. Entschlüsselung von Multimediadaten zu schaffen.

Diese Aufgabe wird durch ein Verfahren zum Erzeugen eines verschlüsselten Multimediadatenstroms nach Anspruch 1, durch ein Verfahren zum Entschlüsseln eines verschlüsselten Multimediadatenstroms nach Anspruch 17, durch eine Vorrichtung zum Erzeugen eines verschlüsselten Multimediadatenstroms nach Anspruch 27 und durch eine Vorrichtung zum Entschlüsseln eines verschlüsselten Multimediadatenstroms nach Anspruch 28 gelöst.

Der vorliegenden Erfindung liegt die Erkenntnis zugrunde, daß zum sicheren und effizienten Verschlüsseln ein sogenanntes hybrides Verschlüsselungsverfahren eingesetzt werden muß, wobei das schnellere z. B. symmetrische Verschlüsselungsverfahren oder Scramblingverfahren zum Ver- bzw. Entschlüsseln der Nutzdaten selbst, d. h. der "Payload"-Daten, eingesetzt wird, während das langsamere asymmetrische Verschlüsselungskonzept nur verwendet wird, um den Nutzdaten-Schlüssel für das z. B. symmetrische Verschlüsselungskonzept zu verschlüsseln und in dieser verschlüsselten Form zu einem Benutzer zu übertragen, damit er den verschlüsselten Nutzdatenstrom wieder entschlüsseln kann. Weiterhin soll der verschlüsselte Nutzdatenstrom, der einerseits eine Nutzdatei sein könnte oder aber ein durchgehender Datenstrom sein kann, gegen unerlaubte Manipulationen gesichert werden. Um dies auf effiziente und möglichst Rechenzeit-sparende Art und Weise zu verwirklichen, wird in das asymmetrische Verschlüsselungsverfahren zum Verschlüsseln des Nutzdaten-Schlüssels der Nutzdatenstrom selbst mit einbezogen.

An dieser Stelle sei darauf hingewiesen, daß Nutzdaten allgemein Multimediadaten, d. h. Audiodaten, Viedeodaten oder eine Kombination aus Audiodaten und Videodaten, aber auch z. B. Textdaten und sogar Binärdaten, wie z. B. ausführbare Programme, umfassen. Im nachfolgenden wird der Gegenstand der vorliegenden Erfindung aus zweckmäßigkeitsgünden jedoch anhand von Multimediadaten dargelegt. Es ist jedoch offensichtlich, daß sämtliche Nutzdaten, für die es ein Verschlüsselungsinteresse gibt, durch die erfindungsgemäßen Vorrichtungen und Verfahren verarbeitet werden können.

Vorzugsweise wird eine Hash-Summe eines Teils des Multimediadatenstroms erzeugt. Dieser Teil könnte zum einen lediglich der Anfangsblock des Multimediadatenstroms sein, zum anderen aber auch Teile der verschlüsselten bzw. unverschlüsselten Multimediadaten selbst umfassen.

Ein Ausgabewert in dem Anfangsblock, der dem Kunden zusammen mit den zumindest teilweise verschlüsselten Multimediadaten in Form des Multimediadatenstroms übermittelt wird, stellt gewissermaßen eine verschlüsselte Version des Multimediadaten-Schlüssels dar, wobei, um diesen Ausgabewert wieder korrekt zu entschlüsseln, um den Multimediadaten-Schlüssel zu erhalten, neben dem Schlüssel für das asymmetrische Verschlüsselungsverfahren auch vom Provider erzeugte individuelle Daten, wie z. B. Lizenzdaten, die sich auf die Art und Weise beziehen, wie ein Benutzer die verschlüsselten Multimediadaten überhaupt benutzen darf, als auch Teile der Multimediadaten selbst sein können. Führt ein Benutzer daher Manipulationen an dem Anfangsblock durch, indem er beispielsweise das Verfallsdatum seiner Lizenz, ein bestimmtes Multimediastück zu verwenden, verändert, so kann er keinesfalls mehr den korrekten Schlüssel zum Entschlüsseln der verschlüsselten Multimediadaten ermitteln, da keine korrekte Entschlüsselung des Ausgabewerts mehr möglich ist.

Ein wesentlicher Vorteil des Verfahrens besteht also darin, daß, sobald jemand den Anfangsblock verändert, sich auch die Hash-Summe über den Anfangsblock ändert. Dadurch ist es nicht mehr möglich, den Schlüssel zum Entschlüsseln der Multimediadaten korrekt zu ermitteln. Somit führt jegliche Änderung am Anfangsblock automatisch zur Zerstörung der Multimediadaten selber.

Diese "implizite" Sicherung des Anfangsblocks umfaßt keine Verschlüsselung des Anfangsblocks, weshalb derselbe auch nicht entschlüsselt werden muß, was bei den Abspielvorrichtungen wiederum zu Ressourceneinsparungen ausgenutzt werden kann. Natürlich wäre eine solche Verschlüsselung des Anfangsblocks ohne weiteres möglich, wenn der Wunsch danach besteht.

Analog dazu führt, wenn verschlüsselte oder unverschlüsselte Multimediadaten selbst in die Verschlüsselung des Multimediadaten-Schlüssels mit einbezogen werden, eine Veränderung an den Multimediadaten zu einer automatischen Zerstörung der gesamten Multimediadaten.

Bevorzugte Ausführungsbeispiele der vorliegenden Erfindung werden nachfolgend bezugnehmend auf die beiliegenden Zeichnungen detailliert erläutert. Es zeigen:
- Fig. 1: einen Multimediadaten-Strom, der gemäß der vorliegenden Erfindung erzeugt werden kann;
- Fig. 2: eine detailliertere Darstellung des Anfangsblocks und des Nutzdatenblocks des verschlüsselten Multimediadatenstroms;
- Fig. 3: eine Auswahl bestimmter Einträge in die einzelnen Unterblöcke des Anfangsblocks;
- Fig. 4: ein Flußdiagramm für das Verfahren zum Erzeugen eines verschlüsselten Multimediadatenstroms gemäß der vorliegenden Erfindung, das vorzugsweise bei einem Distributor, d. h. einem Lieferanten, von Multimediadaten ausgeführt wird; und
- Fig. 5: ein Verfahren zum Entschlüsseln eines verschlüsselten Multimediadatenstroms gemäß der vorliegenden Erfindung, das vorzugsweise bei einem Kunden oder Benutzer der Multimediadaten ausgeführt wird.

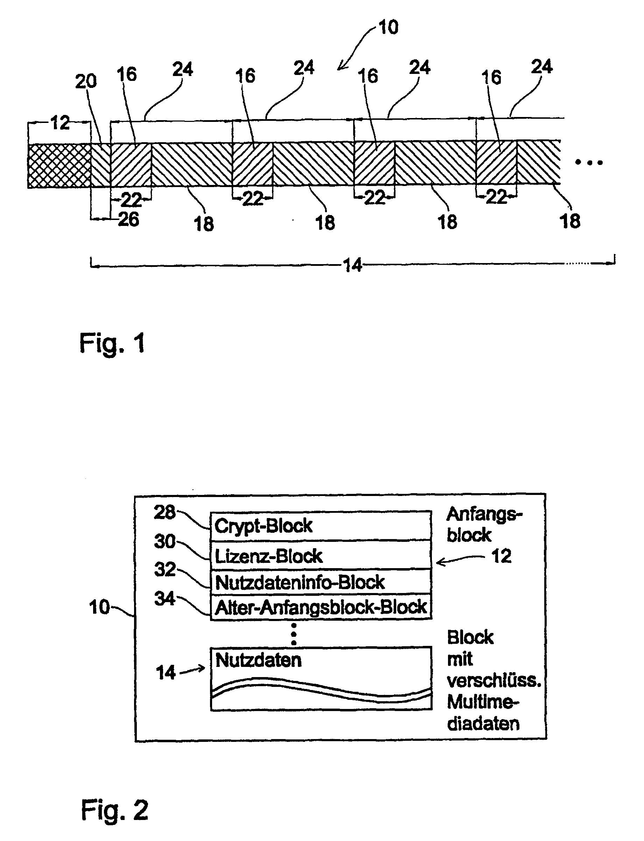

Fig. 1 zeigt einen verschlüsselten Multimediadatenstrom 10, der einen Anfangsblock oder Header 12 und einen Nutzdatenblock 14, d. h. einen Block mit verschlüsselten Multimediadaten, aufweist. Der Nutzdatenblock 14 umfaßt verschlüsselte Abschnitte 16 und unverschlüsselte Abschnitte 18 zwischen den verschlüsselten Abschnitten 16. Außerdem umfaßt ein Multimediadatenstrom, der gemäß der vorliegenden Erfindung erzeugt werden kann, einen weiteren unverschlüsselten Abschnitt 20, der auf den Anfangsblock 12 folgt und vor einem verschlüsselten Abschnitt 16 angeordnet ist.

Üblicherweise sind die zu verschlüsselten Multimediadaten auf irgendeine Art und Weise codiert, wie z. B. nach einem MPEG-Standard, wie z. B. MPEG-2 AAC, MPEG-4 Audio oder MPEG Layer-3. Daher ist es ausreichend, gewisse Abschnitte der zu verschlüsselten Multimediadaten zu verschlüsseln. Dies führt zu einem wesentlich verringerten verarbeitungsaufwand sowohl beim Provider, der die Daten verschlüsselt, als auch beim Kunden, der die Daten wieder entschlüsseln muß. Außerdem wird durch die lediglich teilweise Verschlüsselung der Multimediadaten der Hörgenuß bzw. der Sehgenuß eines Benutzers, der lediglich die unverschlüsselten Multimediadaten verwendet, durch die ständig auftretenden verschlüsselten Blöcke stark beeinträchtigt.

Obwohl Fig. 1 einen verschlüsselten Multimediadatenstrom zeigt, bei dem der Anfangsblock 12 am Anfang des verschlüsselten Multimediadatenstroms angeordnet ist, soll sich diese Anordnung von Anfangsblock und Nutzdatenblock nicht auf die Übertragung des verschlüsselten Multimediadatenstroms beziehen. Der Ausdruck "Anfangsblock" soll lediglich zum Ausdruck bringen, daß eine Entschlüsselungsvorrichtung, die den verschlüsselten Multimediadatenstrom entschlüsseln möchte, zunächst zumindest Teile des Anfangsblocks benötigt, bevor die Multimediadaten selbst entschlüsselt werden können. Je nach Übertragungsmedium könnte der Anfangsblock irgendwo auch innerhalb des Nutzdatenblocks angeordnet sein bzw. durchaus nach bestimmten Teilen des Nutzdatenblocks empfangen werden, wenn beispielsweise an eine Paket-orientierte Übertragung des Multimediadatenstroms gedacht wird, bei der unterschiedliche Pakete, von denen eines den Anfangsblock enthalten kann und ein anderes einen Teil des Nutzdatenblocks enthalten kann, über unterschiedliche physische Übertragungswege übertragen werden, derart, daß die Empfangsreihenfolge ganz und gar nicht der Sendereihenfolge entsprechen muß. Eine Entschlüsselungsvorrichtung muß in diesem Fall jedoch in der Lage sein, die empfangenen Pakete zu speichern und wieder zu ordnen, derart, daß Informationen aus dem Anfangsblock extrahiert werden, um mit dem Entschlüsseln zu beginnen. Der verschlüsselte Multimediadatenstrom könnte ferner in Form einer Datei vorliegen oder aber auch in Form eines tatsächlichen Datenstroms, wenn beispielsweise an eine Live-Übertragung eines Multimediaereignisses gedacht wird. Diese Anwendung wird insbesondere beim digitalen Benutzer-selektiven Rundfunk auftreten.

Die Länge eines verschlüsselten Abschnitts 16 wird durch einen Wert Menge 22 dargestellt, während der Abstand im verschlüsselten Multimediadatenstrom von dem Beginn eines verschlüsselten Abschnitts 16 bis zum Beginn des nächsten verschlüsselten Abschnitts 16 mit Schritt 24 bezeichnet wird. Die Länge des weiteren verschlüsselten Abschnitts 20 wird durch einen Wert Erster Schritt 26 angegeben.

Diese Werte 22, 24 und 26 werden selbstverständlich für ein korrektes Entschlüsseln der Multimediadaten in einer Entschlüsselungsvorrichtung benötigt, weshalb dieselben in den Anfangsblock 12 eingetragen werden müssen, wie es später erläutert wird.

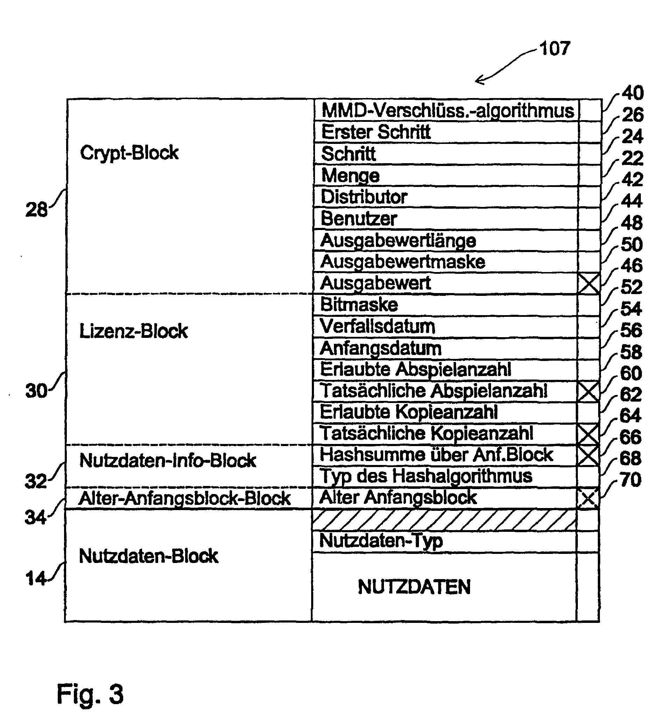

Fig. 2 zeigt eine detailliertere Darstellung des verschlüsselten Multimediadatenstroms 10, der aus dem Anfangsblock 12 und dem Nutzdatenblock 14 besteht. Der Anfangsblock 12 ist in mehrere Unterblöcke unterteilt, die im einzelnen insbesondere bezugnehmend auf Fig. 3 erläutert werden. Es sei darauf hingewiesen, daß die Anzahl und Funktion der Unterblöcke beliebig erweitert werden kann. In Fig. 2 sind daher lediglich beispielhaft einzelne Unterblöcke des Anfangsblocks 12 aufgeführt. Derselbe umfaßt, wie es in Fig. 2 gezeigt ist, einen sogenannten Crypt-Block 29, der allgemein gesagt für das Verschlüsseln der Multimediadaten relevante Informationen aufweist. Weiterhin umfaßt der Anfangsblock 12 einen sogenannten Lizenz-Block 30, der Daten aufweist, die sich auf die Art und Weise beziehen, wie ein Benutzer den verschlüsselten Multimediadatenstrom verwenden kann bzw. darf. Der Anfangsblock 12 umfaßt ferner einen Nutzdateninfo-Block 32, der Informationen bezüglich des Nutzdatenblocks 14 sowie generelle Informationen über den Anfangsblock 12 selbst umfassen kann. Weiterhin kann der Anfangsblock 12 einen Alter-Anfangsblock-Block 34 aufweisen, der eine sogenannte rekursive Anfangsblock-Struktur ermöglicht. Dieser Block versetzt den Benutzer, der neben einer Entschlüsselungsvorrichtung auch eine Verschlüsselungsvorrichtung hat, in die Lage, einen verschlüsselten Multimediadatenstrom für andere in seinem Besitz befindliche Abspielgeräte umzuformatieren, ohne die ursprünglichen vom Distributor gelieferten Anfangsblockinformationen zu verlieren bzw. zu modifizieren. Je nach Anwendungsbereich können noch weitere Unterblöcke, wie z. B. ein IP-Information-Block (IP = Intellectual Property = Geistiges Eigentum) nach ISO/IEC 14496-1, MPEG-4, Systems, 1998, der Urheberrechtsinformationen umfaßt, zu dem Anfangsblock 12 hinzugefügt werden.

Wie es in der Technik üblich ist, kann jedem Block eine interne Blockstruktur zugewiesen werden, die zunächst einen Blockidentifikator fordert, die dann die Länge des Unterblocks umfaßt, und die dann schließlich die Block-Nutzdaten selbst aufführt. Damit erhält der verschlüsselte Multimediadatenstrom und insbesondere der Anfangsblock des verschlüsselten Multimediadatenstroms einer erhöhte Flexibilität, derart, daß auf neue Anforderungen insoweit reagiert werden kann, daß zusätzliche Unterblöcke hinzugefügt werden bzw. bestehende Unterblöcke weggelassen werden können.

Fig. 3 gibt eine Übersicht über die Block-Nutzdaten der einzelnen in Fig. 2 dargestellten Unterblöcke.

Zunächst wird auf den Crypt-Block 28 eingegangen. Derselbe enthält einen Eintrag für einen Multimediadaten-Verschlüsselungsalgorithmus 40, der den bei einem bevorzugten Ausführungsbeispiel verwendeten symmetrischen Verschlüsselungsalgorithmus identifiziert, der beim Verschlüsseln der Multimediadaten verwendet worden ist. Der Eintrag 40 dürfte ein Index für eine Tabelle sein, derart, daß eine Entschlüsselungsvorrichtung nach Lesen des Eintrags 40 in der Lage ist, denselben Verschlüsselungsalgorithmus aus einer Vielzahl von Verschlüsselungsalgorithmen auszuwählen, den die Verschlüsselungsvorrichtung verwendet hat. Der Crypt-Block 28 umfaßt ferner den Eintrag Erster Schritt 26, den Eintrag Schritt 24 und den Eintrag Menge 22, die bereits in Verbindung mit Fig. 1 dargestellt worden sind. Diese Einträge in dem Anfangsblock versetzen eine Entschlüsselungsvorrichtung in die Lage, einen verschlüsselten Multimediadatenstrom entsprechend unterzugliedern, um eine korrekte Entschlüsselung durchführen zu können.

Der Crypt-Block 28 enthält ferner einen Eintrag für den Distributor bzw. Provider bzw. Lieferanten 42, der ein Code für den Distributor ist, der den verschlüsselten Multimediadatenstrom erzeugt hat. Ein Eintrag Benutzer 44 identifiziert den Benutzer, der von dem Distributor, der durch den Eintrag 42 identifiziert ist, den verschlüsselten Multimediadatenstrom auf irgendeine Art und Weise erhalten hat. Eine mögliche Verwendung dieser Kennungen ist es, die Benutzerkennung gerätespezifisch durchzuführen. Der Eintrag Benutzer würde dann die Seriennummer eines PC, eines Laptops, eines Auto-HiFi-Geräts, einer Heim-Stereoanlage etc. umfassen, die ein Abspielen nur auf dem speziellen Gerät zuläßt. Zur weiteren Erhöhung der Flexibilität und/oder Sicherheit könnte statt der Seriennummer, die bei jedem Hersteller unterschiedlich aussieht, die aber zufällig identisch sein könnten, eine spezielle Kennung, wie z. B. eine logische Verknüpfung der Festplattengröße mit der Prozessornummer etc. beim Beispiel eines PC, eingesetzt werden.

Ein Eintrag 46 enthält einen Ausgabewert, auf den später detailliert eingegangen wird. Dieser Ausgabewert stellt allgemein gesagt eine verschlüsselte Version des Multimediadaten-Schlüssels dar, der in Verbindung mit dem durch den Eintrag 40 identifizierten Multimediadaten-Verschlüsselungsalgorithmus benötigt wird, um die in dem Nutzdatenblock 14 vorhandenen verschlüsselten Multimediadaten (Abschnitte 16 von Fig. 1) korrekt zu entschlüsseln. Um eine ausreichende Flexibilität für zukünftige Anwendungen zu haben, sind ferner die beiden Einträge Ausgabewertlänge 48 und Ausgabewertmaske 50 vorgesehen. Der Eintrag Ausgabewertlänge 48 gibt an, welche Länge der Ausgabewert 46 tatsächlich hat. Um ein flexibles Anfangsblockformat zu erhalten, sind jedoch in dem Anfangsblockformat für den Ausgabewert mehr Byte vorgesehen als ein Ausgabewert derzeit tatsächlich hat. Die Ausgabewertmaske 50 gibt daher an, wie ein kürzerer Ausgabewert auf einen längeren Ausgabewertplatz gewissermaßen verteilt wird. Ist die Ausgabewertlänge beispielsweise halb so groß wie der verfügbare Platz für den Ausgabewert, so könnte die Ausgabewertmaske derart gestaltet sein, daß die erste Hälfte der Ausgabewertmaske gesetzt ist, während die zweite Hälfte abgedeckt ist. Dann würde der Ausgabewert einfach in den von der Syntax für den Anfangsblock vorgesehenen Raum eingetragen werden und die erste Hälfte einnehmen, während die andere Hälfte aufgrund der Ausgabewertmaske 50 ignoriert wird.

Im nachfolgenden wird auf den Lizenz-Block 30 des Anfangsblocks 12 eingegangen. Derselbe umfaßt einen Eintrag Bitmaske 52. Dieser Eintrag kann bestimmte spezielle Informationen für das Abspielen bzw. für die generelle Art der Verwendung der verschlüsselten Multimediadaten haben. Insbesondere könnte hiermit einer Entschlüsselungsvorrichtung mitgeteilt werden, ob bzw. ob nicht die Nutzdaten lokal abgespielt werden können. Weiterhin könnte hier signalisiert werden, ob das Herausforderungs-Antwort-Verfahren zum Verschlüsseln eingesetzt worden ist, das in dem eingangs erwähnten Deutschen Patent DE 196 25 635 C1 beschrieben ist und einen effizienten Datenbankzugriff ermöglicht.

Ein Eintrag Verfallsdatum 54 gibt den Zeitpunkt an, zu dem die Erlaubnis, den verschlüsselten Multimediadatenstrom zu entschlüsseln, erlischt. Eine Entschlüsselungsvorrichtung wird in diesem Fall den Eintrag Verfallsdatum 54 prüfen und mit einer eingebauten Zeitmeßeinrichtung vergleichen, um im Falle, daß das Verfallsdatum bereits überschritten ist, keine Entschlüsselung des verschlüsselten Multimediadatenstroms mehr durchzuführen. Dies erlaubt es einem Provider, auch zeitlich begrenzt verschlüsselte Multimediadaten zur Verfügung zu stellen, was den Vorteil einer wesentlich flexibleren Handhabung und auch Preisgestaltung ermöglicht. Diese Flexibilität wird weiter durch einen Eintrag Anfangsdatum 56 unterstützt, in dem spezifiziert ist, ab wann eine verschlüsselte Multimediadatei entschlüsselt werden darf. Eine Verschlüsselungsvorrichtung wird den Eintrag Anfangsdatum mit ihrer eingebauten Uhr vergleichen, um erst dann eine Entschlüsselung der verschlüsselten Multimediadaten durchzuführen, wenn der aktuelle Zeitpunkt später als das Anfangsdatum 56 ist.

Ein Eintrag Erlaubte Abspielanzahl 58 gibt an, wie oft der verschlüsselte Multimediadatenstrom entschlüsselt, d. h. abgespielt werden darf. Dies erhöht weiter die Flexibilität des Providers, derart, daß er nur eine bestimmte Anzahl des Abspielens beispielsweise gegen eine bestimmte Summe zuläßt, die kleiner ist als eine Summe, die für die unbeschränkte Nutzung des verschlüsselten Multimediadatenstroms anfallen würde.

Zur Verifizierung bzw. Unterstützung des Eintrags Erlaubte Abspielanzahl 58 umfaßt der Lizenz-Block 30 ferner einen Eintrag Tatsächliche Abspielanzahl 60, der nach jedem Entschlüsseln des verschlüsselten Multimediadatenstroms beispielsweise um Eins inkrementiert werden könnte. Eine Entschlüsselungsvorrichtung wird daher immer überprüfen, ob der Eintrag Tatsächliche Abspielanzahl kleiner als der Eintrag Erlaubte Abspielanzahl ist. Wenn dies der Fall ist, wird eine Entschlüsselung der Multimediadaten durchgeführt. Wenn dies nicht der Fall ist, wird keine Entschlüsselung mehr ausgeführt.

Analog zu den Einträgen 58 und 60 sind die Einträge Erlaubte Kopieanzahl 62 und Tatsächliche Kopieanzahl 64 implementiert. Durch die beiden Einträge 62 und 64 wird sichergestellt, daß ein Benutzer der Multimediadaten dieselben lediglich so oft kopiert, wie es ihm vom Provider erlaubt wird, bzw, so oft, wie er beim Kauf der Multimediadaten bezahlt hat. Durch die Einträge 58 bis 64 wird ein effektiver Urheberrechtsschutz sichergestellt, und kann eine Selektion zwischen privaten Nutzern und gewerblichen Nutzern erreicht werden, beispielsweise, indem die Einträge Erlaubte Abspielanzahl 58 und Erlaubte Kopieanzahl 62 auf einen kleinen Wert eingestellt werden.

Die Lizenzierung könnte z. B. so gestaltet sein, daß eine bestimmte Anzahl von Kopien (Eintrag 62) des Originals erlaubt ist, während keine Kopien einer Kopie zulässig sind. Der Anfangsblock einer Kopie würde dann im Gegensatz zum Anfangsblock des Originals als Eintrag Erlaubte Kopieanzahl eine Null haben, derart, daß diese Kopie von einer ordnungsgemäßen Ver/Entschlüsselungsvorrichtung nicht mehr kopiert wird.

Bei dem hier gezeigten Beispiel für ein Multimediadatenschutzprotokoll (MMP; MMP = Multimedia Protection Protcol) enthält der Anfangsblock 12 ferner einen Nutzdaten-Informationsblock 32, der hier lediglich zwei Block-Nutzdateneinträge 66 und 68 hat, wobei der Eintrag 66 eine Hash-Summe über den gesamten Anfangsblock enthält, während der Eintrag 68 den Typ des Hash-Algorithmus identifiziert, der zum Bilden der Hash-Summe über den gesamten Anfangsblock verwendet worden ist.

In diesem Zusammenhang sei beispielsweise auf das Fachbuch "Applied Cryptography", Second Edition, John Wiley & Sons, Inc. von Bruce Schneier (ISBN 0 471-11709-9) verwiesen, das eine ausführliche Darstellung symmetrischer Verschlüsselungsalgorithmen, asymmetrischer Verschlüsselungsalgorithmen und Hash-Algorithmen umfaßt.

Der Anfangsblock 12 umfaßt schließlich den Alter-Anfangsblock-Block 34, der neben den Synchronisationsinformationen, die in Fig. 3 nicht dargestellt sind, den Eintrag Alter Anfangsblock 70 aufweist. In den Eintrag Alter-Anfangsblock 70 kann, wenn ein Benutzer selbst eine Verschlüsselung durchführt und somit einen neuen Anfangsblock 12 erzeugt, der alte Anfangsblock vom Provider bewahrt werden, um keine wesentlichen Informationen zu verlieren, die der Provider in den Anfangsblock eingetragen hat. Dazu könnten beispielsweise Urheberinformationen (IP-Information-Block) frühere Benutzerinformationen und Distributoreninformationen zählen, die eine Zurückverfolgung einer Multimediadatei, die beispielsweise mehrmals von unterschiedlichen Geräten ent-/ver-schlüsselt worden ist, auf den ursprünglichen Anbieter transparent ermöglichen, wobei Urheberinformationen bewahrt werden. Damit ist es möglich, jederzeit zu überprüfen, ob eine verschlüsselte Multimediadatei legal oder illegal erworben worden ist.

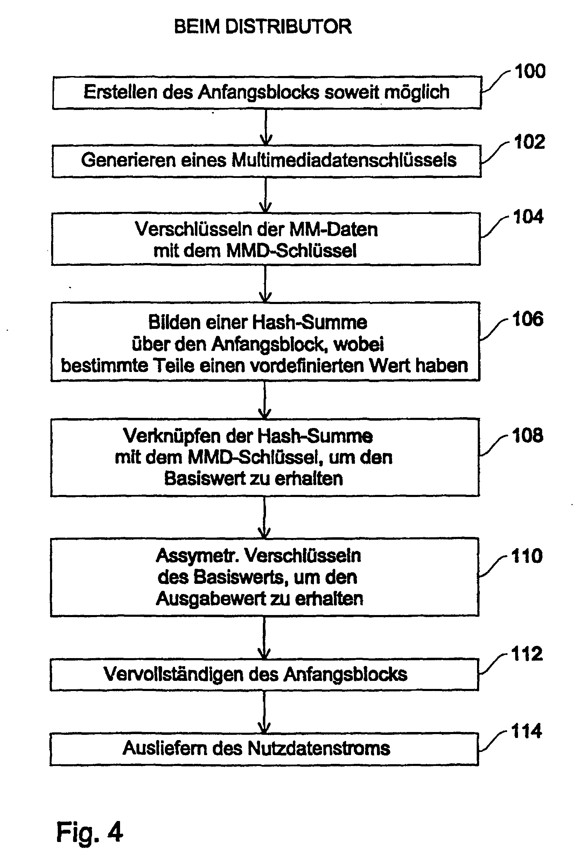

Nachdem auf das Format des verschlüsselten Multimediadatenstroms und verschiedene Funktionalitäten von Verschlüsselungs- und Entschlüsselungsvorrichtungen eingegangen worden ist, wird nun anhand von Fig. 4 das erfindungsgemäße Verfahren zum Verschlüsseln von Multimediadaten dargelegt. Bei einer bevorzugten Anwendung der vorliegenden Erfindung wird das erfindungsgemäße Verschlüsselungsverfahren beim Distributor ausgeführt. Der Distributor führt bevorzugterweise ein hybrides Verschlüsselungsverfahren aus, d. h. ein symmetrisches Verschlüsselungsverfahren zum Verschlüsseln der Multimediadaten und ein asymmetrisches Verschlüsselungsverfahren zum verschlüsseln des Multimediadaten-Schlüssels.

Ein Kunde oder Benutzer, der Multimediadaten von einen Distributor erwerben will, tritt zunächst mit dem Distributor in Verbindung und könnte ihm beispielsweise seine Kreditkartennummer mitteilen, von der der Distributor fällige Geldbeträge abbucht. Daraufhin erhält der Kunde vom Distributor eine Tabelle der symmetrischen Verschlüsselungsverfahren. Außerdem tauschen Distributor und Kunde jeweils ihre öffentlichen Schlüssel aus. Wenn der Benutzer nun ein bestimmtes Multimediawerk vom Distributor bestellt, so führt der Distributor eine kundenselektive Verschlüsselung für diesen Kunden durch.

Im einzelnen könnten die Schritte zum Erzeugen des verschlüsselten Multimediadatenstroms folgendermaßen aussehen.

Der Distributor erstellt zunächst den Anfangsblock 12 für die Multimediadatei soweit es bisher möglich ist (100). Wie es aus Fig. 3 ersichtlich ist, liegt zu diesem Zeitpunkt noch nicht der Ausgabewert vor. Daher wird im Schritt 100, in dem der Anfangsblock 12 soweit als möglich erstellt wird, der Eintrag für den Ausgabewert freigelassen. Es existieren jedoch hier schon sämtliche anderen Einträge in den Crypt-Block und sämtliche anderen Einträge in den Lizenz-Block. Die Hash-Summe oder je nach dem die digitale Unterschrift in dem Eintrag 66 über den gesamten Anfangsblock existiert dagegen noch nicht, weshalb auch dieser Eintrag frei bleibt. Auch der Eintrag Alter-Anfangsblock 70 wird sehr wahrscheinlich, wenn die Multimediadatei vom Distributor zum ersten Mal verschlüsselt werden, frei bleiben. Hat der Distributor die verschlüsselte Multimediadatei jedoch von einem anderen Distributor erworben, so könnte der Eintrag 70 bereits gefüllt sein. In einem Schritt 102 ermittelt der Distributor einen Multimediadatenschlüssel K, der zusammen mit dem Multimediadaten-Verschlüsselungsalgorithmus, der durch den Eintrag 40 (Fig. 3) identifiziert ist, eine Verschlüsselung der Multimediadaten erlaubt, die in einem Schritt 104 durchgeführt wird.

Gemäß der vorliegenden Erfindung wird eine Hash-Summe über den Anfangsblock gebildet, wobei bestimmte Teile einen vordefinierten Wert haben (Schritt 106). Die detaillierte Darstellung des Anfangsblocks in Fig. 3 enthält am rechten Rand eine Spalte 107, die veranschaulichen soll, welche Teile bzw. Einträge in den Anfangsblock 12 beim Bilden einer Hash-Summe im Schritt 106 (Fig. 4) einen vordefinierten Wert erhalten. Einen vordefinierten Wert erhalten insbesondere der Eintrag Ausgabewert 46, der Eintrag Tatsächliche Abspielanzahl 60, der Eintrag Tatsächliche Kopieanzahl 64 und der Eintrag Hash-Summe über den Anfangsblock 66 sowie unter Umständen der Eintrag Alter-Anfangsblock 70, wie es durch das gepunktete Kreuzchen für den Eintrag 70 dargestellt ist. Bestimmte Teile des Anfangsblocks müssen einen vordefinierten Wert zugewiesen bekommen, wenn die Hash-Summe im Schritt 106 gebildet wird, da diese noch nicht feststehen (Ausgabewert 46) bzw. von einer Entschlüsselungsvorrichtung geändert werden (Einträge 60 und 64). Der Eintrag 66, d. h. die Hash-Summe über den Anfangsblock, steht ferner noch nicht fest, da in dieselbe selbstverständlich auch der Ausgabewert 46 eingeht.

Die Einträge Distributor 42, Benutzer 44 sowie die Einträge in den Lizenz-Block 30 werden jedoch beim Bilden der Hash-Summe im Schritt 106 (Fig. 4) mit einbezogen, wodurch bereits eine Personalisierung bzw. eine Absicherung der Lizenz-Block-Einträge erreicht wird, da die in dem Schritt 106 erhaltene Hash-Summe mit dem Multimediadaten-Schlüssel verknüpft wird, um einen Basiswert zu erhalten (Schritt 108).

Daran anschließend wird der im Schritt 108 erhaltene Basiswert mittels des öffentlichen Schlüssels (Ö) des Kunden asymmetrisch verschlüsselt (Schritt 110). Um den verschlüsselten Multimediadatenstrom in ein übertragbares Format zu bringen, wird schließlich noch der Anfangsblock vervollständigt (Schritt 112), derart, daß der Ausgabewert 46 in den bereits im Schritt 100 erstellten Anfangsblock eingetragen wird.

In Abweichung von dem in Fig. 4 dargestellten Ausführungsbeispiel kann die Schrittreihenfolge vertauscht werden. So könnte beispielsweise zunächst die gesamte Verschlüsselung des Multimediadatenschlüssels durchgeführt werden, woraufhin die Verschlüsselung der Multimediadaten durchgeführt wird. Ferner könnte die Hash-Summe über den Anfangsblock ermittelt werden, bevor der Multimediadatenschlüssel generiert wird. Weitere Variationen sind möglich. Selbstverständlich kann der Schritt 108 erst dann durchgeführt werden, wenn die Hash-Summe ermittelt worden ist. Darüberhinaus kann der Schritt 110 erst dann durchgeführt werden, wenn der Basiswert vorliegt.

Vorzugsweise wird zum Verschlüsseln der Multimedia-Daten mit dem Multimediadaten-Schlüssel im Schritt 104 ein symmetrisches Verschlüsselungsverfahren eingesetzt, da hier unter Umständen relativ große Mengen an Daten ver- bzw. entschlüsselt werden müssen. Symmetrische Verschlüsselungsverfahren arbeiten, wie es bekannt ist, schneller als asymmetrische Verschlüsselungsverfahren, wie sie im Schritt 110 zum Verschlüsseln des Multimediadatenschlüssels eingesetzt werden.

Ferner wird es bevorzugt, daß der Multimediadaten-Schlüssel K mittels eines Zufallszahlengenerators erzeugt wird, derart, daß der Basiswert, der in dem Schritt 108 erzeugt wird, für denselben Kunden jedesmal eine andere Form annimmt, um es einem Angreifer auf das cryptographische System so schwer als möglich zu machen.

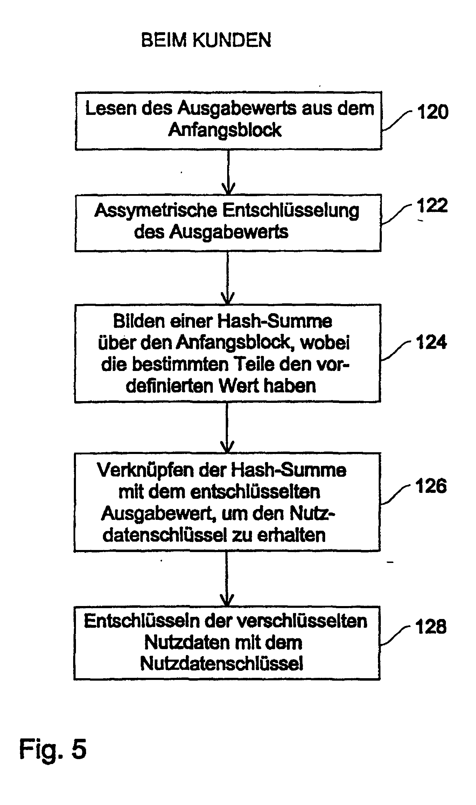

Die Verknüpfungsoperation, um die Hash-Summe mit dem Multimediadaten-Schlüssel K zu verknüpfen, sollte, wie es bezugnehmend auf Fig. 5 noch erläutert wird, eine selbstinverse Verknüpfung sein. Eine solche selbstinverse Verknüpfung wäre die XOR- (Exklusiv-Oder-) Verknüpfung. Selbstinvers bedeutet, daß ein zweimaliges Anwenden dieser Verknüpfung zu einem Ergebnis führt, das gleich dem Ausgangswert ist. Außerdem ist es möglich, daß die Verknüpfungs-Funktion aus Fig. 5 die inverse Funktion derjenigen aus Fig. 4 ist. Die Verknüpfungsfunktion muß daher lediglich umkehrbar sein, d. h. zu derselben muß eine Umkehrfunktion existieren.

Im Schritt 110 wird gemäß der vorliegenden Erfindung ein asymmetrisches Verschlüsselungsverfahren ausgeführt. Wie es bekannt ist, existieren bei einem asymmetrischen Verschlüsselungsverfahren zwei Schlüssel, mit denen eine Ver- bzw. Entschlüsselung möglich ist, die jedoch voneinander unterschiedlich sind. Ein Schlüssel wird als privater Schlüssel P (Privat Key) bezeichnet, während der andere Schlüssel als der öffentliche Schlüssel Ö (Public Key) bezeichnet wird. Allgemein gesagt haben asymmetrische Verschlüsselungsverfahren die Eigenschaft, daß zu verschlüsselnde Daten, die mittels des privaten Schlüssels verschlüsselt worden sind, mit dem öffentlichen Schlüssel wieder entschlüsselt werden können. Analog dazu können zu verschlüsselnde Daten, die mit dem öffentlichen Schlüssel verschlüsselt worden sind, wieder mit dem privaten Schlüssel entschlüsselt werden. Daraus ist zu sehen, daß die privaten und öffentlichen Schlüssel prinzipiell gegeneinander austauschbar sind.

Ein Aspekt der vorliegenden Erfindung besteht darin, daß der Anfangsblock über die Schritte 106 und 108 in die Verschlüsselung des Multimediadatenschlüssels miteinbezogen wird. Alternativ könnten jedoch auch Teile des Nutzdatenblocks miteinbezogen werden, wodurch aufgrund unerlaubter Manipulationen der Nutzdaten der gesamte Multimediadatenstrom unbrauchbar werden würde, da es dann nicht mehr möglich ist, den Multimediadatenschlüssel in der Entschlüsselungsvorrichtung zu berechnen.

Obwohl im Schritt 106 davon gesprochen wird, daß eine Hash-Summe über den Anfangsblock gebildet wird, sei darauf hingewiesen, daß jede Verarbeitung eines Teils des Multimediadatenstroms, um Informationen abzuleiten, die den Teil des Multimediadatenstrom kennzeichnen, eingesetzt werden könnte. Je aufwendiger der Hash-Algorithmus ist, der hier verwendet wird, umso sicherer wird der verschlüsselte Multimediadatenstrom gegenüber Angreifern, die ihn knacken wollen, um beispielsweise die Lizenzinformationen bzw. die Distributoroder Benutzer-Informationen in ihrem (unerlaubten) Sinne zu modifizierten.

Im nachfolgenden wird auf Fig. 5 Bezug genommen, die ein Flußdiagramm des Entschlüsselungsverfahrens zeigt, das möglicherweise von einem Kunden durchgeführt wird. In einem Schritt 120 liest der Kunde zunächst den Ausgabewert aus dem Anfangsblock des verschlüsselten Multimediadatenstroms. Er führt daraufhin eine Entschlüsselung dieses Ausgabewerts mittels der entsprechenden asymmetrischen Entschlüpsselung durch (Schritt 122). Hierauf bildet die Entschlüsselungsvorrichtung beim Kunden wieder eine Hash-Summe über den Anfangsblock, wobei die bestimmten Teile, die beim Verschlüsseln einen vordefinierten Wert hatten, in einem Schritt 124 ebenfalls den gleichen vordefinierten Wert erhalten. Anschließend wird die Hash-Summe mit dem entschlüsselten Ausgabewert (Schritt 122) verknüpft, woraus sich der Multimediadatenschlüssel ergibt (Schritt 126). In einem Schritt 128 werden schließlich die verschlüsselten Multimediadaten mit dem in dem Schritt 126 erhaltenen Multimediadatenschlüssel entschlüsselt.

Es zeigt sich, daß das Entschlüsselungsverfahren im wesentlichen die Umkehrung des Verschlüsselungsverfahrens, das anhand des Flußdiagramms von Fig. 4 beschrieben worden ist, darstellt. Selbstverständlich können auch bei dem in Fig. 5 gezeigten Entschlüsselungsverfahren mehrere Schritte vertauscht werden. So könnte beispielsweise zunächst die Hash-Summe über den Anfangsblock gebildet werden (Schritt 124), wonach der Ausgabewert mit dem öffentlichen Schlüssel entschlüsselt wird (Schritt 122). Auch das Lesen des Ausgabewerts aus dem Anfangsblock (Schritt 120) können beispielsweise erst nach dem Schritt 124, jedoch unbedingt vor dem Schritt 126 durchgeführt werden. Auch Schritt 128 ist erst möglich, nachdem der Schritt 126 durchgeführt worden ist, da der den Multimediadatenschlüssel ergibt.

Das in Fig. 5 gezeigte Entschlüsselungsverfahren bringt anhand des Schritts 124 noch einmal deutlich zum Ausdruck, was passiert, wenn ein Kunden den Anfangsblock 12 modifiziert hat, der ja üblicherweise unverschlüsselt ist und ohne weiteres für Angriffe zugänglich ist. Eine Änderung der Lizenzinformationen, beispielsweise des Anfangs- und des Enddatums würde jedoch unweigerlich dazu führen, daß die Hash-Summe über den Anfangsblock, die im Schritt 124 gebildet wird, einen anderen Wert hat wie die Hash-Summe die im Schritt 106 (Fig. 4) während der Verschlüsselung gebildet worden ist. Die erneute Verknüpfung der Hash-Summe im Schritt 126 (Fig. 5) wird daher nicht mehr zu dem korrekten Multimediadatenschlüssel führen, da die beiden Hash-Summen, d. h. die Hash-Summe während des Verschlüsselns und die Hash-Summe während des Entschlüsselns, voneinander unterschiedlich sind. Somit sind die gesamten Multimediadaten unbrauchbar, da sie nicht mehr korrekt entschlüsselt werden können, da es nicht mehr möglich ist, aufgrund der Manipulation am Anfangsblock den Multimediadatenschlüssel zu berechnen, den die Verschlüsselungsvorrichtung- eingesetzt hat. Jede Änderung am Anfangsblock führt somit automatisch zur Zerstörung der Multimediadaten selbst.

## Patentansprüche

1. Verfahren zum Erzeugen eines Nutzdatenstroms (10), der einen Anfangsblock (12) und einen Nutzdatenblock (14) mit verschlüsselten Nutzdaten aufweist, mit folgenden Schritten:
Generieren (102) eines Nutzdaten-Schlüssels für einen Nutzdaten-Verschlüsselungsalgorithmus zum Verschlüsseln von Nutzdaten;
Verschlüsseln (104) von Nutzdaten unter Verwendung des Nutzdaten-Schlüssels und des Nutzdaten-Verschlüsselungsalgorithmus, um einen verschlüsselten Abschnitt (16) des Nutzdatenblocks (14) des Nutzdatenstroms (10) zu erhalten;
Verarbeiten (106) eines Teils des Nutzdatenstroms (10), um Informationen abzuleiten, die den Teil des Nutzdatenstroms kennzeichnen;
Verknüpfen (108) der Informationen mit dem Nutzdatenschlüssel mittels einer invertierbaren logischen Verknüpfung, um einen Basiswert zu erhalten;
Verschlüsseln (110) des Basiswerts unter Verwendung eines Schlüssels von zwei zueinander unterschiedlichen Schlüsseln (P, Ö) mit einem asymmetrischen Verschlüsselungsverfahren, wobei die zwei unterschiedlichen Schlüssel der öffentliche (Ö) bzw. der private (P) Schlüssel für das asymmetrische Verschlüsselungsverfahren sind, um einen Ausgabewert (46) zu erhalten, der eine verschlüsselte Version des Nutzdatenschlüssels ist; und
Eintragen (112) des Ausgabewerts (46) in den Anfangsblock (12) des Nutzdatenstroms (10).

2. Verfahren nach Anspruch 1, bei dem der Nutzdaten-Verschlüsselungsalgorithmus ein symmetrischer Verschlüsselungsalgorithmus ist.

3. Verfahren nach Anspruch 1 oder 2, bei dem die invertierbare logische Verknüpfung selbst-invertierend ist und eine EXKLUSIV-ODER-Verknüpfung umfaßt.

4. Verfahren nach einem der vorhergehenden Ansprüche, bei dem der eine Schlüssel der zwei voneinander unterschiedlichen Schlüssel (P, Ö) der private Schlüssel (P) eines Erzeugers des Nutzdatenstroms ist oder der öffentliche Schlüssel (Ö) eines Konsumenten des Nutzdatenstroms ist ist.

5. Verfahren nach einem der vorhergehenden Ansprüche, bei dem der Teil des Nutz-Datenstroms, der verarbeitet wird (106), um die Informationen abzuleiten, zumindest einen Teil des Anfangsblocks (12) umfaßt.

6. Verfahren nach einem der vorhergehenden Ansprüche, bei dem der Schritt des Verarbeitens (106) das Bilden einer Hash-Summe aufweist.

7. Verfahren nach einem der vorhergehenden Ansprüche, das ferner folgenden Schritt aufweist:
Identifizieren des Algorithmus, der im Schritt des Verarbeitens (106) verwendet wird, durch einen Eintrag (68) in den Anfangsblock.

8. Verfahren nach einem der vorhergehenden Ansprüche, das ferner folgenden Schritt aufweist:
Eintragen von Lizenzdaten (30) in den Anfangsblock (12), die sich darauf beziehen, in welcher Weise der Nutzdatenstrom (10) verwendet werden darf.

9. Verfahren nach Anspruch 8, bei dem die Lizenzdaten (30) angeben, wie oft der Nutzdatenstrom abgespielt werden darf (58) und wie oft er bereits abgespielt wurde (60).

10. Verfahren nach Anspruch 8 oder 9, bei dem die Lizenzdaten (30) angeben, wie oft der Inhalt des Nutzdatenstroms kopiert werden darf (62), und wie oft er bereits kopiert worden ist (64).

11. Verfahren nach einem der Ansprüche 8 bis 10, bei dem die Lizenzdaten (30) angeben, ab wann der Nutzdatenstrom nicht mehr benutzt werden darf (54).

12. Verfahren nach einem der Ansprüche 8 bis 11, bei dem die Lizenzdaten (30) angeben, ab wann der Nutzdatenstrom entschlüsselt werden darf (56).

13. Verfahren nach einem der Ansprüche 8 bis 12, bei dem der Teil des Nutzdatenstroms, der verarbeitet wird, um die Informationen abzuleiten (106) die Lizenzdaten (30) umfaßt.

14. Verfahren nach einem der vorhergehenden Ansprüche, bei dem der Schritt des Verarbeitens ferner folgende Teilschritte aufweist:
Setzen des Eintrags (46) für den Ausgabewert in dem Anfangsblock (12) auf einen definierten Wert, und Verarbeiten (106) des gesamten Anfangsblocks einschließlich des auf einen definierten Wert gesetzten Eintrags (46).

15. Verfahren nach einem der vorhergehenden Ansprüche, das ferner folgende Schritte aufweist:
Identifizieren des Lieferanten (42) des Nutzdatenstroms durch einen Lieferanteneintrag (42) in den Anfangsblock (12);
Identifizieren des Benutzers (44) des Nutzdatenstroms durch einen Benutzereintrag (44) in den Anfangsblock (12) des Nutzdatenstroms,
wobei der Lieferanteneintrag (42) und der Benutzereintrag (44) zu dem Teil des Nutzdatenstroms (10) gehören, der verarbeitet wird (106), um die Informationen abzuleiten.

16. Verfahren nach einem der vorhergehenden Ansprüche, das ferner folgenden Schritt aufweist:
Identifizieren des Nutzdaten-Verschlüsselungsalgorithmus durch einen Eintrag (40) in den Anfangsblock (12) des Nutzdatenstroms (10).

17. Verfahren zum Entschlüsseln eines verschlüsselten Nutzdatenstroms (10), der einen Anfangsblock (12) und einen Nutzdatenblock (14) mit verschlüsselten Nutzdaten aufweist, wobei der Anfangsblock (12) einen Ausgabewert (46) aufweist, der durch eine Verschlüsselung eines Basiswerts mit einem asymmetrischen Verschlüsselungsverfahren unter Verwendung eines Schlüssels von zwei unterschiedlichen Schlüsseln (P, Ö), die einen privaten (P) und einen öffentlichen (Ö) Schlüssel umfassen, erzeugt worden ist, wobei der Basiswert eine Verknüpfung eines Nutzdatenschlüssels, mit dem die verschlüsselten Nutzdaten unter Verwendung eines Nutzdaten-Verschlüsselungsalgorithmus verschlüsselt sind, mit durch eine bestimmte Verarbeitung abgeleiteten Informationen, die einen bestimmten Teil des Nutzdatenstroms (10) eindeutig kennzeichnen, darstellt, mit folgenden Schritten:
Erhalten (120) des Ausgabewerts (46) aus dem Anfangsblock (12);
Entschlüsseln (122) des Ausgabewerts (46) unter Verwendung des anderen Schlüssels des asymmetrischen Verschlüsselungsverfahrens, um den Basiswert zu erhalten;
Verarbeiten (124) eines Teils des Nutzdatenstroms (10) unter Verwendung des beim Verschlüsseln verwendeten Verarbeitungsverfahrens, um Informationen abzuleiten, die den Teil kennzeichnen, wobei der Teil dem bestimmten Teil beim Verschlüsseln entspricht;
Verknüpfen (126) der Informationen mit dem Basiswert unter Verwendung der entsprechenden Verknüpfung, wie sie beim Verschlüsseln verwendet wurde, um den Nutzdatenschlüssel zu erhalten; und
Entschlüsseln (128) des Blocks (14) mit verschlüsselten Nutzdaten unter Verwendung des Nutzdaten-Schlüssels und des beim Verschlüsseln verwendeten Nutzdaten-Verschlüsselungsalgorithmus.

18. Verfahren nach Anspruch 17, bei dem der Anfangsblock (12) Lizenzinformationen (30) aufweist, die sich darauf beziehen, in welcher Weise der Nutzdatenstrom (10) verwendet werden kann.

19. verfahren nach Anspruch 17 oder 18, bei dem der Teil, der verarbeitet wird, um die Informationen abzuleiten, der Anfangsblock (12) ist.

20. Verfahren nach Anspruch 18 oder 19, das ferner folgenden Schritt aufweist:
Überprüfen, ob die Lizenzinformationen (30) ein Entschlüsseln erlauben; und
falls ein Entschlüsseln nicht erlaubt ist, Abbrechen des Entschlüsselungsverfahrens.

21. Verfahren nach einem der Ansprüche 17 bis 20, bei dem der Anfangsblock (12) einen Benutzereintrag (44) aufweist, das ferner folgende Schritte aufweist:
Überprüfen, ob ein aktueller Benutzer autorisiert ist, anhand des Benutzereintrags (44); und
falls der Benutzer nicht autorisiert ist, Abbrechen des Entschlüsselungsverfahrens.

22. Verfahren nach einem der Ansprüche 17 bis 21, bei dem der eine Schlüssel, der beim Verschlüsseln verwendet wurde, der private Schlüssel (P) des asymmetrischen Verschlüsselungsverfahrens ist, während -der andere Schlüssel, der beim Entschlüsseln verwendet wird, der öffentliche Schlüssel (Ö) des asymmetrischen Verschlüsselungsverfahrens ist.

23. Verfahren nach einem der Ansprüche 17 bis 21, bei dem der eine Schlüssel, der beim Verschlüsseln verwendet wurde, der öffentliche Schlüssel (Ö) des asymmetrischen Verschlüsselungsverfahrens ist, während der andere Schlüssel, der beim Entschlüsseln verwendet wird, der private Schlüssel (P) des asymmetrischen Verschlüsselungsverfahrens ist.

24. Verfahren nach einem der Ansprüche 17 bis 23, bei dem der Schritt des Verarbeitens (124) das Bilden einer Hash-Summe umfaßt.

25. Verfahren nach einem der Ansprüche 17 bis 24, bei dem ein Teil des Anfangsblocks (12), der beim Verschlüsseln für den Schritt des Verarbeitens auf einen definierten Wert gesetzt wurde, beim Entschlüsseln für den Schritt des Verarbeitens (124) auf denselben definierten Wert gesetzt wird.

26. Verfahren nach Anspruch 25, bei dem der Teil des Anfangsblocks (12), der auf einen definierten Wert gesetzt wird, den Eintrag für den Ausgabewert (46) des Anfangsblocks (12) umfaßt.

27. Verfahren nach einem der Ansprüche 17 bis 26, bei dem der Schritt des Verknüpfens (126) das Verwenden einer EXKLUSIV-ODER-Verknüpfung aufweist.

28. Vorrichtung zum Erzeugen eines verschlüsselten Nutzdatenstroms, der einen Anfangsblock (12) und einen Nutzdatenblock (14) mit verschlüsselten Nutzdaten aufweist, mit folgenden Merkmalen:
einer Einrichtung zum Generieren (102) eines Nutzdaten-Schlüssels für einen Nutzdaten-Verschlüsselungsalgorithmus zum Verschlüsseln von Nutzdaten;
einer Einrichtung zum Verschlüsseln (104) von Nutzdaten unter Verwendung des Mutzdaten-Schlüssels und des Nutzdaten-Verschlüsselungsalgorithmus, um einen verschlüsselten Abschnitt (16) des Nutzdatenblocks (14) des Nutzdatenstroms (10) zu erhalten;
einer Einrichtung zum Verarbeiten (106) eines Teils des Nutzdatenstroms (10), um Informationen abzuleiten, die den Teil des Nutzdatenstroms kennzeichnen;
einer Einrichtung zum Verknüpfen (108) der Informationen mit dem Nutzdatenschlüssels mittels einer invertierbaren logischen Verknüpfung, um einen Basiswert zu erhalten;
einer Einrichtung zum Verschlüsseln (110) des Basiswerts unter Verwendung eines Schlüssels von zwei zueinander unterschiedlichen Schlüsseln (P, Ö) mit einem asymmetrischen Verschlüsselungsverfahren, wobei die zwei unterschiedlichen Schlüssel der öffentliche (Ö) bzw. der private (P) Schlüssel für das asymmetrische Verschlüsselungsverfahren sind, um einen Ausgabewert (46) zu erhalten, der eine verschlüsselte Version des Nutzdatenschlüssels ist; und einer Einrichtung zum Eintragen (112) des Ausgabewerts (46) in den Anfangsblock (12) des Nutzdatenstroms (10).

29. Vorrichtung zum Entschlüsseln eines verschlüsselten Nutzdatenstroms (10), der einen Anfangsblock (12) und einen Block (14) mit verschlüsselten Nutzdaten aufweist, wobei der Anfangsblock (12) einen Ausgabewert (46) aufweist, der durch eine Verschlüsselung eines Basiswerts mit einem asymmetrischen Verschlüsselungsverfahren unter Verwendung eines Schlüssels von zwei unterschiedlichen Schlüsseln (P, Ö), die einen privaten (P) und einen öffentlichen (Ö) Schlüssel umfassen, erzeugt worden ist, wobei der Basiswert eine Verknüpfung eines Nutzdatenschlüssels, mit dem die verschlüsselten Nutzdaten unter Verwendung eines Nutzdaten-Verschlüsselungsalgorithmus verschlüsselt sind, von durch eine bestimmte Verarbeitung abgeleiteten Informationen, die einen bestimmten Teil des Nutzdatenstroms (10) eindeutig kennzeichnen, darstellt, mit folgenden Merkmalen:
einer Einrichtung zum Erhalten (120) des Ausgabewerts (46) aus dem Anfangsblock (12);
einer Einrichtung zum Entschlüsseln (122) des Ausgabewerts (46) unter Verwendung des anderen Schlüssels (Ö) und des asymmetrischen Verschlüsselungsverfahrens, um den Basiswert zu erhalten;
einer Einrichtung zum Verarbeiten (124) eines Teils des Nutzdatenstroms (10) unter Verwendung des beim Verschlüsseln verwendeten Verarbeitungsverfahrens, um Informationen abzuleiten, die den Teil kennzeichnen, wobei der Teil dem bestimmten Teil beim Verschlüsseln entspricht;
einer Einrichtung zum Verknüpfen (126) der Informationen mit dem Basiswert unter Verwendung der entsprechenden Verknüpfung, wie sie beim Verschlüsseln verwendet wurde, um den Nutzdatenschlüssel zu erhalten; und
einer Einrichtung zum Entschlüsseln (128) des Blocks (14) mit verschlüsselten Nutzdaten unter Verwendung des Nutzdaten-Schlüssels und des beim Verschlüsseln verwendeten Nutzdaten-Verschlüsselungsalgorithmus.

30. Vorrichtung nach Anspruch 28 oder 29, die als Personalcomputer, als Stereoanlage, als Auto-HiFi-Gerät, als Solid-State-Player oder als Abspielgerät mit Festplatte oder CD-ROM ausgeführt ist.

## Claims

1. Method for producing a payload data stream (10) comprising a header (12) and a payload data block (14) containing encrypted payload data, comprising the following steps:
generating (102) a payload data key for a payload data encryption algorithm for encrypting payload data;
encrypting (104) payload data using said payload data key and said payload data encryption algorithm to obtain an encrypted section (16) of said payload data block (14) of said payload data stream (10);
processing (106) a part of said payload data stream (10) to deduce information marking said part of said payload data stream;
linking (108) said information containing said payload data key by means of an invertible logic linkage to obtain a basic value;
encrypting (110) said basic value using a key of two keys (P, O) being different from each other by an asymmetrical encryption method, said two different keys being the public (O) and the private (P) keys respectively for said asymmetrical encryption method, to obtain an output value (46) being an encrypted version of said payload data key; and
entering (112) said output value (46) into said header (12) of said payload data stream (10).

2. Method according to claim 1, in which said payload data encryption algorithm is a symmetrical encryption algorithm.

3. Method according to claim 1 or 2, in which said invertible logic linkage is self-inverting and includes an XOR-linkage.

4. Method according to one of the preceding claims, in which one key of said two keys (P, O) being different from each other is the private key (P) of a producer of said payload data stream or the public key (O) of a consumer of said payload data stream.

5. Method according to one of the preceding claims, in which said part of said payload data stream being processed (106) to deduce said information includes at least a part of said header (12).

6. Method according to one of the preceding claims, in which said step of processing (106) comprises forming a hash sum.

7. Method according to one of the preceding claims, further comprising the following step:
identifying said algorithm being used in said step of processing (106) by an entry (68) into said header.

8. Method according to one of the preceding claims, further comprising the following step:
entering license data (30) into said header (12), said data referring to in which way said payload data stream (10) is allowed to be employed.

9. Method according to claim 8, in which said license data (30) indicates how often said payload data stream is allowed to be replayed (58) and how often it has already been replayed (60).

10. Method according to claim 8 or 9, in which said license data (30) indicates how often the contents of said payload data stream is allowed to be copied (62) and how often it has already been copied (64).

11. Method according to one of claims 8 to 10, in which said license data (30) indicates from when on said payload data stream is no longer allowed to be employed (54).

12. Method according to one of claims 8 to 11, in which said license data (30) indicates from when on said payload data stream is allowed to be decrypted (56).

13. Method according to one of claims 8 to 12, in which said part of said payload data stream being processed to deduce said information (106) includes said license data (30).

14. Method according to one of the preceding claims, in which said step of processing further comprises the following substep:
setting said entry (46) for said output value in said header (12) to a defined value and processing (106) said entire header, including said entry (46) set to a defined value.

15. Method according to one of the preceding claims, further comprising the following steps:
identifying the supplier (42) of said payload data stream by a supplier entry (42) into said header (12);
identifying the user (44) of said payload data stream by a user entry (44) into said header (12) of said payload data stream,
said supplier entry (42) and said user entry (44) belonging to said part of said payload data stream (10) being processed (106) to deduce said information.

16. Method according to one of the preceding claims, further comprising the following step:
identifying said payload data encryption algorithm by an entry (40) into said header (12) of said payload data stream (10).

17. Method for decrypting an encrypted payload data stream (10) comprising a header (12) and a payload data block (14) containing encrypted payload data, said header (12) comprising an output value (46) having been generated by an encryption of a basic value by an asymmetrical encryption method using a key of two different keys (P, O) including a private (P) and a public (O) key, said basic value representing a linkage of a payload data key, with which said encrypted payload data is encrypted using a payload data encryption algorithm, and information deduced by a certain processing, said information marking a certain part of said payload data stream (10) unambiguously, said method comprising the following steps:
obtaining (120) said output value (46) from said header (12);
decrypting (122) said output value (46) using the other key of said asymmetrical encryption method to obtain said basic value;
processing (124) a part of said payload data stream (10) using the processing method used for encrypting to deduce information marking said part, said part corresponding to said certain part when encrypting;
linking (126) said information and said basic value using the corresponding linkage as it has been used when encrypting to obtain said payload data key; and
decrypting (128) said block (14) containing encrypted payload data using said payload data key and said payload data encryption algorithm used when encrypting.

18. Method according to claim 17, in which said header (12) comprises license information (30) referring to in what way said payload data stream (10) can be employed.

19. Method according to claim 17 or 18, in which said part being processed to deduce said information is said header (12).

20. Method according to claim 18 or 19, further comprising the following steps:
checking whether said license information (30) allows a decryption; and
if a decryption is not allowed, cancelling said decryption method.

21. Method according to one of claims 17 to 20, in which said header (12) comprises a user entry (44), said method further comprising the following steps:
checking by means of said user entry (44) whether a current user is authorized; and
if the user is not authorized, cancelling said decryption method.

22. Method according to one of claims 17 to 21, in which one key having been used when encrypting is the private key (P) of said asymmetrical encryption method, while the other key having been used when decrypting is the public key (O) of said asymmetrical encryption method.

23. Method according to one of claims 17 to 21, in which one key having been used when encrypting is the public key (O) of said asymmetrical encryption method, while the other key having been used when decrypting is the private key (P) of said asymmetrical encryption method.

24. Method according to one of claims 17 to 23, in which said step of processing (124) includes forming a hash sum.

25. Method according to one of claims 17 to 24, in which a part of said header (12) having been set to a defined value for said step of processing when encrypting is set to the same defined value for said step of processing (124) when decrypting.

26. Method according to claim 25, in which said part of said header (12) being set to a defined value includes said entry for said output value (46) of said header (12).

27. Method according to one of claims 17 to 26, in which said step of linking (126) comprises using an XOR-linkage.

28. Device for producing an encrypted payload data stream comprising a header (12) and a payload data block (14) containing encrypted payload data, comprising:
means for generating (102) a payload data key for a payload data encryption algorithm for encrypting said payload data;
means for encrypting (104) payload data using said payload data key and said payload data encryption algorithm to obtain an encrypted section (16) of said payload data block (14) of said payload data stream (10);
means for processing (106) a part of said payload data stream (10) to deduce information marking said part of said payload data stream;
means for linking (108) said information and said payload data key by means of an invertible logic linkage to obtain a basic value;
means for encrypting (110) said basic value using a key of two keys (P, O) being different from each other by an asymmetrical encryption method, said two different keys being the public (O) and the private (P) keys respectively for said asymmetrical encryption method to obtain an output value (46) being an encrypted version of said payload data key; and
means for entering (112) said output value (46) into said header (129 of said payload data stream (10).

29. Device for decrypting an encrypted payload data stream (10) comprising a header (12) and a block (14) containing encrypted payload data, said header (12) comprising an output value (46) having been generated by an encryption of a basic value by an asymmetrical encryption method using a key of two different keys (P, O) including a private (P) and a public (O) key, said basic value representing a linkage of a payload data key, with which said encrypted payload data is encrypted using a payload data encryption algorithm, and information deduced by a certain processing, said information marking a certain part of said payload data stream (10) unambiguously, said device further comprising:
means for obtaining (120) said output value (46) from said header (12);
means for decrypting (122) said output value (46) using said other key (O) and said asymmetrical encryption method to obtain said basic value;
means for processing (124) a part of said payload data stream (10) using the processing method used when encrypting to deduce information marking said part, said part corresponding to said certain part when encrypting;
means for linking (126) said information and said basic value using the corresponding linkage as it has been used when encrypting to obtain said payload data key; and
means for decrypting (128) said block (14) containing encrypted payload data using said payload data key and said payload data encryption algorithm used when encrypting.

30. Device according to claim 28 or 29, which is implemented as a personal computer, a stereo system, a car hi-fi instrument, a solid state player or a replay instrument containing a hard disk or a CD-ROM.

## Revendications

1. Procédé pour la génération d'un flux de données utiles (10) présentant un bloc initial (12) et un bloc de données utiles (14) à données utiles encryptées, aux étapes suivantes consistant à :
générer (102) une clef de données utiles pour un algorithme d'encryptage de données utiles destiné à encrypter des données utiles ;
encrypter (104) des données utiles à l'aide de la clef de données utiles et de l'algorithme d'encryptage de données utiles, pour obtenir un segment encrypté (16) du bloc de données utiles (14) du flux de données utiles (10) ;
traiter (106) une partie du flux de données utiles (10), pour dériver des informations caractérisant la partie du flux de données utiles ;
lier (108) les informations à la clef de données utiles à l'aide d'une connexion logique réversible, pour obtenir une valeur de base ;
encrypter (110) la valeur de base à l'aide d'une clef composée de deux clefs (P, Ö) différentes l'une de l'autre, par un procédé d'encryptage asymétrique, les deux clefs différentes étant la clef publique (Ö) ou la clef privée (P) du procédé d'encryptage asymétrique, pour obtenir une valeur de sortie (46) qui est une version encryptée de la clef de données utiles ; et
entrer (112) la valeur de sortie (46) dans le bloc initial (12) du flux de données utiles (10).

2. Procédé selon la revendication 1, dans lequel l'algorithme d'encryptage de données utiles est un algorithme d'encryptage symétrique.

3. Procédé selon la revendication 1 ou 2, dans lequel la connexion logique réversible est auto-réversible et comporte une liaison EXCLUSIF-OU.

4. Procédé selon l'une des revendications précédentes, dans lequel l'une des clefs parmi les deux clefs différentes l'une de l'autre (P, Ô) est la clef privée (P) d'un générateur du flux de données utiles ou la clef publique (Ö) d'un consommateur du flux de données utiles.

5. Procédé selon l'une des revendications précédentes, dans lequel la partie du flux de données utiles qui est traitée (106) pour dériver les informations comporte au moins une partie du bloc initial (12).

6. Procédé selon l'une des revendications précédentes, dans lequel l'étape de traitement (106) présente la formation d'une somme de Hash.

7. Procédé selon l'une des revendications précédentes, présentant, par ailleurs, l'étape suivante consistant à :
identifier l'algorithme utilisé à l'étape de traitement (106) par une entrée (68) dans le bloc initial.

8. Procédé selon l'une des revendications précédentes, présentant, par ailleurs, l'étape suivante consistant à :
entrer dans le bloc initial (12) des données de licence (30) concernant la manière dont peut être utilisé le flux de données utiles (10).

9. Procédé selon la revendication 8, dans lequel les données de licence (30) indiquent combien de fois peut être reproduit (58) le flux de données utiles et combien de fois il a déjà été reproduit (60).

10. Procédé selon la revendication 8 ou 9, dans lequel les données de licence (30) indiquent combien de fois peut être copié (62) le contenu du flux de données utiles et combien de fois il a déjà été copié (64).

11. Procédé selon l'une des revendications 8 à 10, dans lequel les données de licence (30) indiquent à partir de quand le flux de données utiles ne peut plus être utilisé (54).

12. Procédé selon l'une des revendications 8 à 11, dans lequel les données de licence (30) indiquent à partir de quand le flux de données utiles peut être décrypté (56).

13. Procédé selon l'une des revendications 8 à 12, dans lequel la partie du flux de données utiles qui est traitée pour dériver les informations (106) comporte les données de licence (30).

14. Procédé selon l'une des revendications précédentes, dans lequel l'étape de traitement présente, par ailleurs, les étapes partielles suivantes consistant à :
régler l'entrée (46) de la valeur de sortie dans le bloc initial (12) à une valeur définie, et traiter (106) l'ensemble du bloc initial, y compris l'entrée (46) réglée à une valeur définie.

15. Procédé selon l'une des revendications précédentes, présentant, par ailleurs. les étapes suivantes consistant à :
identifier le fournisseur (42) du flux de données utiles par une entrée de fournisseur (42) dans le bloc initial (12) ;
identifier l'utilisateur (44) du flux de données utiles par une entrée d'utilisateur (44) dans le bloc initial (12) du flux de données utiles,
l'entrée de fournisseur (42) et l'entrée d'utilisateur (44) faisant partie de la partie du flux de données utiles (10) qui est traitée (106) pour dériver les informations.

16. Procédé selon l'une des revendications précédentes, présentant, par ailleurs. l'étape suivante consistant à :
identifier l'algorithme d'encryptage de données utiles par une entrée (40) dans le bloc initial (12) du flux de données utiles (10).

17. Procédé pour le décryptage d'un flux de données utiles encrypté (10) présentant un bloc initial (12) et un bloc de données utiles (14) à données utiles encryptées, le bloc initial (12) présentant une valeur de sortie (46) générée par un encryptage d'une valeur de base, par un procédé d'encryptage asymétrique, à l'aide d'une clef composée de deux clefs (P, Ö) différentes comportant une clef privée (P) et une clef publique (Ö), la valeur de base représentant une connexion d'une clef de données utiles, par laquelle les données utiles encryptées sont encryptées à l'aide d'un algorithme d'encryptage de données utiles, à des informations dérivées par un traitement déterminé et caractérisant, de manière univoque, une partie déterminée du flux de données utiles (10), aux étapes suivantes consistant à :
obtenir (120) la valeur de sortie (46) à partir du bloc initial (12) ;
décrypter (122) la valeur de sortie (46) à l'aide de l'autre clef du procédé d'encryptage asymétrique, pour obtenir la valeur de base ;
traiter (124) une partie du flux de données utiles (10) à l'aide du procédé de traitement utilisé lors de l'encryptage, pour dériver des informations caractérisant la partie, la partie correspondant à la partie déterminée lors de l'encryptage ;
lier (126) les informations à la valeur de base à l'aide de la connexion correspondante, telle qu'utilisée lors de l'encryptage, pour obtenir la clef de données utiles ; et
décrypter (128) le bloc (14) à données encryptées à l'aide de la clef de données utiles et de l'algorithme d'encryptage de données utiles utilisé lors de l'encryptage.

18. Procédé selon la revendication 17, dans lequel le bloc initial (12) présente des informations de licence (30) concernant la manière dont peut être utilisé le flux de données utiles (10).

19. Procédé selon la revendication 17 ou 18, dans lequel la partie qui est traitée pour dériver les informations est le bloc initial (12).

20. Procédé selon la revendication 18 ou 19, présentant, par ailleurs, l'étape suivante consistant à :
vérifier si les informations de licence (30) permettent un décryptage ; et
au cas où un décryptage ne serait pas permis, interrompre le procédé de décryptage.

21. Procédé selon l'une des revendications 17 à 20, dans lequel le bloc initial (12) présente une entrée d'utilisateur (44), présentant les étapes suivantes consistant à :
vérifier si un utilisateur actuel est autorisé, à l'aide de l'entrée d'utilisateur.

22. Procédé selon l'une des revendications 17 à 21, dans lequel l'une des clefs qui a été utilisée lors de l'encryptage est la clef privée (P) du procédé d'encryptage asymétrique, tandis que l'autre clef qui a été utilisée lors de l'encryptage est la clef publique (Ö) du procédé d'encryptage asymétrique.

23. Procédé selon l'une des revendications 17 à 21, dans lequel l'une des clefs qui a été utilisée lors de l'encryptage est la clef publique (Ö) du procédé d'encryptage asymétrique, tandis que l'autre clef qui a été utilisée lors de l'encryptage est la clef privée (P) du procédé d'encryptage asymétrique.

24. Procédé selon l'une des revendications 17 à 23, dans lequel l'étape de traitement (124) comporte la formation d'une somme de Hash.

25. Procédé selon l'une des revendications 17 à 24, dans lequel une partie du bloc initial (12), qui a été réglée à une valeur définie pour l'étape de traitement lors de l'encryptage, est réglée à la même valeur définie pour l'étape de traitement (124) lors du décryptage.

26. Procédé selon la revendication 25, dans lequel la partie du bloc initial (12) qui a été réglée à une valeur définie comprend l'entrée de la valeur de sortie (46) du bloc initial (12).

27. Procédé selon l'une des revendications 17 à 26, dans lequel l'étape de liaison (126) présente l'utilisation d'une liaison EXCLUSIF-OU.

28. Dispositif pour la génération d'un flux de données utiles encryptées présentant un bloc initial (12) et un bloc de données utiles (14) à données utiles encryptées, aux caractéristiques suivantes :
un dispositif destiné à générer (102) une clef de données utiles pour un algorithme d'encryptage de données utiles destiné à encrypter des données utiles ;
un dispositif destiné à encrypter (104) des données utiles à l'aide de la clef de données utiles et de l'algorithme d'encryptage de données utiles, pour obtenir un segment encrypté (16) du bloc de données utiles (14) du flux de données utiles (10) ;
un dispositif destiné à traiter (106) une partie du flux de données utiles (10), pour dériver des informations caractérisant la partie du flux de données utiles ;
un dispositif destiné à lier (108) les informations à la clef de données utiles à l'aide d'une connexion logique réversible, pour obtenir une valeur de base ;
un dispositif destiné à encrypter (110) la valeur de base à l'aide d'une clef composée de deux clefs (P, Ö) différentes l'une de l'autre, par un procédé d'encryptage asymétrique, les deux clefs différentes étant la clef publique (Ö) ou la clef privée (P) du procédé d'encryptage asymétrique, pour obtenir une valeur de sortie (46) qui est une version encryptée de la clef de données utiles ; et
un dispositif destiné à entrer (112) la valeur de sortie (46) dans le bloc initial (12) du flux de données utiles (10).

29. Dispositif pour le décryptage d'un flux de données utiles encrypté (10) présentant un bloc initial (12) et un bloc de données utiles (14) à données utiles encryptées, le bloc initial (12) présentant une valeur de sortie (46) générée par un encryptage d'une valeur de base, par un procédé d'encryptage asymétrique, à l'aide d'une clef composée de deux clefs (P, Ö) différentes comportant une clef privée (P) et une clef publique (Ö), la valeur de base représentant une connexion d'une clef de données utiles, par laquelle les données utiles encryptées sont encryptées à l'aide d'un algorithme d'encryptage de données utiles, à des informations dérivées par un traitement déterminé et caractérisant, de manière univoque, une partie déterminée du flux de données utiles (10), aux caractéristiques suivantes :
un dispositif destiné à obtenir (120) la valeur de sortie (46) à partir du bloc initial (12);
un dispositif destiné à décrypter (122) la valeur de sortie (46) à l'aide de l'autre clef (Ö) du procédé d'encryptage asymétrique, pour obtenir la valeur de base ;
un dispositif destiné à traiter (124) une partie du flux de données utiles (10) à l'aide du procédé de traitement utilisé lors de l'encryptage, pour dériver des informations caractérisant la partie, la partie correspondant à la partie déterminée lors de l'encryptage;
un dispositif destiné à lier (126) les informations à la valeur de base à l'aide de la connexion correspondante, telle qu'utilisée lors de l'encryptage, pour obtenir la clef de données utiles ; et
un dispositif destiné à décrypter (128) le bloc (14) à données encryptées à l'aide de la clef de données utiles et de l'algorithme d'encryptage de données utiles utilisé lors de l'encryptage.

30. Dispositif selon la revendication 28 ou 29, réalisé sous forme d'ordinateur personnel, d'installation stéréo, d'appareil Hi-Fi pour automobile, de reproducteur monobloc ou de reproducteur à disque dur ou à CD-ROM.
